# EUROPÄISCHE PATENTSCHRIFT

(11) **EP 4 286 221 B1**
(45) Veröffentlichungstag und Bekanntmachung des Hinweises auf die Patenterteilung: **03.12.2025**
(21) Anmeldenummer: 22176992.0
(22) Anmeldetag: 02.06.2022
(51) Int. Cl.: B60Q 1/38, B60Q 1/24

(54) **VERFAHREN ZUR ERZEUGUNG DER LICHTFUNKTION EINES FAHRTRICHTUNGSANZEIGERS BEI EINEM KRAFTFAHRZEUG SOWIE KRAFTFAHRZEUG ZUR DURCHFÜHRUNG DES VERFAHRENS**
METHOD FOR GENERATING THE LIGHT FUNCTION OF A DIRECTION INDICATOR IN A MOTOR VEHICLE AND MOTOR VEHICLE FOR CARRYING OUT THE METHOD
PROCÉDÉ DE GÉNÉRATION DE LA FONCTION D'ÉCLAIRAGE D'UN CLIGNOTANT DANS UN VÉHICULE AUTOMOBILE, AINSI QUE VÉHICULE AUTOMOBILE DESTINÉ À LA MISE EN UVRE DU PROCÉDÉ

(43) Veröffentlichungstag der Anmeldung: 06.12.2023
(73) Patentinhaber: VOLKSWAGEN AG, 38440 Wolfsburg (DE)
(72) Erfinder: Studeny, Christian, 38170 Schöppenstedt (Eitzum) (DE)

(56) Entgegenhaltungen:
- EP-A1- 3 222 906
- WO-A1-2021/049232
- WO-A2-2004/076231
- CN-B- 107 719 226
- DE-A1- 102018 217 243

## Beschreibung

Die Erfindung betrifft ein Verfahren zur Erzeugung der Lichtfunktion eines Fahrtrichtungsanzeigers bei einem Kraftfahrzeug gemäß den Merkmalen vom Oberbegriff des Patentanspruchs 1. Die Erfindung betrifft ferner ein Kraftfahrzeug zur Durchführung des Verfahrens mit den Merkmalen vom Oberbegriff des Patentanspruchs 8.

Ein derartiges Verfahren und ein derartiges Kraftfahrzeug sind aus der DE 10 2017 223 441 A1 und auch aus der AT 518343 A1 bekannt geworden.

So beschreibt die DE 10 2017 223 441 A1 eine Lichtsteuervorrichtung für eine räumliche Abgrenzung mehrerer Lichtfunktionen. Zumindest eine der Lichtfunktionen ist als ein Abblendlicht, Abbiegelicht oder Projektionslicht für ein Kraftfahrzeug ausgebildet. Die Lichtsteuerungsvorrichtung beinhaltet eine Lichtemissionseinheit mit einer Lichtquelle und einer Steuereinheit zum Einstellen einer Lichtstärke und Abstrahlcharakteristik eines Lichts der Lichtemissionseinheit. Die Steuereinheit kann die Lichtemissionseinheit derart ansteuern, dass in Abhängigkeit der Lichtfunktion ausschließlich ein Teilbereich eines beleuchtbaren Bereichs beleuchtet wird, wobei dem Teilbereich eine der Lichtfunktionen zugeordnet ist. Das Licht der Lichtquelle kann mittels der Lichtsteuerung unterschiedlichen Lichtfunktionen zugewiesen werden. Damit können mehrere Lichtfunktionen mittels eines einzigen Scheinwerfers, der die Lichtsteuervorrichtung aufweist, auf eine Fahrbahn projiziert werden. Ein einziger Scheinwerfer kann damit zur Ausleuchtung einer Fahrbahn sowie zugleich zu Projektion von informativen Symbolen, wie z. B. von Abbiegepfeilen als Teil des Abbiegelichts, eingesetzt werden.

In der AT 518343 A1 wird eine Beleuchtungsvorrichtung für ein Kraftfahrzeug beschrieben, welche Projektionsoptiken und Lichtquellen aufweist. Jede einer Projektionsoptik zugeordnete Lichtquelle trägt zu einer definierten Beleuchtungsfunktion bei, indem sie ein Lichtsegment erzeugt. Die zu jeweils einer definierten Beleuchtungsfunktion beitragenden Lichtsegmente werden von den entsprechenden Projektionsoptiken in Form einer Bodenprojektion derart projiziert, dass von benachbarten Projektionsoptiken erzeugbare Lichtsegmente unmittelbar nebeneinander liegen, wobei jede Lichtquelle unabhängig von den anderen Lichtquellen ansteuerbar ist. Eine Beleuchtungsfunktion kann beispielsweise ein Abbiegelicht, eine Zusatz-Abbiegelicht-Bodenprojektion oder auch eine Zusatz-Blinklicht-Bodenprojektion sein. Die Projektionsoptiken können Reflektoren und/oder Lichtleiter umfassen. Durch sequenzielles Schalten einzelner Lichtsegmente ist das Erzeugen von animierten Bodenprojektionen möglich. Beispielsweise bewegt sich ein gelber, wischender Fahrtrichtungsanzeiger in einer weißen Bodenprojektion des Abbiegelichts, wobei bei Überlappung des Fahrtrichtungsanzeigers mit Segmenten des Abbiegelichts die Segmente abgeschaltet werden.

Aus der WO 2021/049232 A1 ist eine Zeichenvorrichtung für Fahrzeuge bekannt, die eine Anzeige auf einer Straßenoberfläche unter Verwendung eines bernsteinfarbenen Lichts abbildet. Das bernsteinfarbene Licht wird so abgestrahlt, dass ein Helligkeitskontrast, der unter Verwendung der Straßenoberflächen-Zeichenhelligkeit und der Hintergrundhelligkeit berechnet wird, mindestens 0,2 beträgt, wenn die Anzeigehelligkeit als Straßenoberflächen-Zeichenhelligkeit und die Helligkeit der Umgebung um das Fahrzeug als Hintergrundhelligkeit betrachtet wird.

Aus der DE 10 2018 217 243 A1 ist ein Verfahren zur optischen Begleitung eines Ausparkmanövers eines Kraftfahrzeugs bekannt. Dabei wird durch wenigstens eine fahrzeugeigene Lichterzeugungseinrichtung ein Lichterscheinungsbild auf einer Fahrbahn erzeugt. Weiterhin wird vorgeschlagen, dass das Lichterscheinungsbild bei einem beabsichtigten Ausparkmanöver aus einem neben der Fahrbahn angeordneten Parkplatz auf der Fahrbahn erzeugt wird.

Der vorliegenden Erfindung liegt nun die Aufgabe zu Grunde, ein Verfahren zur Erzeugung der Lichtfunktion eines Fahrtrichtungsanzeigers bereitzustellen, bei dem die Sichtbarkeit einer zusätzlich zur Erzeugung der Lichtfunktion des Fahrtrichtungsanzeigers erzeugten Boden-Lichtprojektion verbessert ist. Eine weitere Aufgabe der vorliegenden Erfindung besteht darin, ein geeignetes Kraftfahrzeug zur Durchführung des Verfahrens bereitzustellen.

Vorliegende Aufgaben werden durch ein Verfahren mit den Merkmalen von Patentanspruch 1 und durch ein Kraftfahrzeug mit den Merkmalen von Patentanspruch 8 gelöst.

Vorteilhafte Ausbildungen beziehungsweise Weiterbildungen der Erfindung sind den jeweiligen Unteransprüchen zu entnehmbar.

Die Erfindung geht somit zunächst von einem Verfahren zum Erzeugung der Lichtfunktion eines Fahrtrichtungsanzeigers bei einem Kraftfahrzeug aus. Dabei erfolgt eine Aktivierung der Lichtfunktion des Fahrtrichtungsanzeigers dann, wenn sich das Kraftfahrzeug in einem betriebsbereiten Zustand befindet und im Kraftfahrzeug ein Betätigungselement betätigt wird. Das Betätigungselement kann beispielsweise als am Lenkradstock des Kraftfahrzeugs angeordneter Blinkerhebel ausgebildet sein.

Als betriebsbereiter Zustand im Sinne der vorliegenden Erfindung wird bei einem Verbrennungsmotor der Zustand verstanden, bei dem die Zündung eingeschaltet wurde. Bei einem Elektrofahrzeug ist dies ein solcher Zustand, in dem eine Traktionsbatterie mit dem vorhandenen Hochvoltnetz des Fahrzeugs elektrisch verbunden wurde.

Bei dem Verfahren kann zusätzlich zur Erzeugung der Lichtfunktion des

Fahrtrichtungsanzeigers eine Boden-Lichtprojektion in unmittelbarer Nähe des Kraftfahrzeugs erzeugt werden.

Der Boden kann eine Fahrbahn, eine Straße oder der Untergrund des Kraftfahrzeugs sein. Der Begriff *in unmittelbarer Nähe des Kraftfahrzeugs* soll festlegen, dass die Boden-Lichtprojektion nur maximal wenige Meter vom Kraftfahrzeug entfernt erzeugt wird.

Das erfindungsgemäße Verfahren ist nun dadurch gekennzeichnet, dass die Boden-Lichtprojektion nur dann erzeugt wird, wenn eine Umgebungshelligkeit des Kraftfahrzeugs einen bestimmten Grenzwert unterschreitet.

Auf diese Weise kann sichergestellt werden, dass die Boden-Lichtprojektion, welche zusätzlich zur Lichtfunktion eines Fahrtrichtungsanzeigers erzeugt wird, im Fall ihrer Erzeugung immer gut wahrgenommen werden kann. Es wird dadurch also sichergestellt, dass der Kontrast zwischen Umgebung und der Boden-Lichtprojektion möglichst groß ist. Davon unabhängig wird die Lichtfunktion eines Fahrtrichtungsanzeigers bei Betätigung des Betätigungselementes immer erzeugt, wenn das Kraftfahrzeug betriebsbereit ist.

Erfindungsgemäß weicht der Grenzwert der Umgebungshelligkeit zur Erzeugung der Boden-Lichtprojektion von einem Grenzwert der Umgebungshelligkeit zur Erzeugung der Lichtfunktion eines Abbiegelichts ab.

Auf diese Weise wird eine höhere Flexibilität in der Abstimmung des Verfahrens erzielt. Insbesondere kann so die Boden-Lichtprojektion noch gezielter auf die Umgebungshelligkeit abgestimmt werden.

Bei einer solchen Verfahrensweise ist es gemäß einer weiteren Ausbildung des Erfindungsgedankens sehr von Vorteil, wenn der Grenzwert zur Erzeugung der Boden-Lichtprojektion einer höheren Umgebungshelligkeit entspricht als der Grenzwert zur Erzeugung der Lichtfunktion des Abbiegelichts. Mit anderen Worten wird auf diese Weise die Boden-Lichtprojektion in der Regel noch eher erzeugt als die Lichtfunktion des Abbiegelichts. Dies trägt zu einer Erhöhung der Verkehrssicherheit bei, da auch kleinere Fahrtrichtungsänderungen des Fahrzeugs, wie beispielsweise Fahrspurwechsel, für Verkehrsteilnehmer noch früher und besser erkennbar sind.

Nach einer anderen, vorteilhaften Weiterbildung ist die Boden-Lichtprojektion ein definiertes, grafisches Muster. Das Muster ist durch flächige, helle Bereiche mit definiertem Umriss gebildet, die durch wenigstens einen dunklen Bereich voneinander beabstandet sind. Derartige Muster, welche helle und dunkle Bereiche enthalten weisen starke Gradienten zwischen den Hell-/Dunkelbereichen auf und sind daher generell gut wahrnehmbar gegenüber undefinierten Ausleuchtungsbereichen. Überdies grenzen sich derartige Muster sehr gut gegenüber dem nur in einem vorgeschriebenen Abstrahlwinkel definierten Abbiegelicht ab, da dieses nicht nur den Boden (z. B. Straße), sondern auch weiter entfernte Bereiche ausleuchtet.

Bevorzugt werden einfache Muster verwendet, da diese schneller zu erfassen sind. Denkbar ist beispielsweise, ein Muster aus mehreren Viertelkreisen oder Dreiecken bestehen zu lassen. Diese können derart zusammen angeordnet sein, dass sie eine Richtungsangabe darstellen. Es ist aber auch denkbar, dass ein Muster aus mehreren (also wenigstens zwei) flächigen und hellen Bereichen besteht, die länglich und gebogen oder länglich und pfeilartig geknickt ausgebildet sind. Die Aufzählung soll nicht als abschließend betrachtet werden.

In zweckmäßiger Ausgestaltung der Erfindung wird weiterhin vorgeschlagen, dass bei gleichzeitiger Erzeugung der Lichtfunktion des Abbiegelichts und der Boden-Lichtprojektion derart verfahren wird, dass das gesamte Abbiegelicht oder wenigstens ein sich mit der Boden-Lichtprojektion überschneidender Teilbereich des Abbiegelichts auf einen Helligkeitswert mit niedrigerer Helligkeit statisch gedimmt wird. Beispielsweise ist es auch denkbar, dass die Lichtfunktion des Abbiegelichts durch Erzeugung mehrerer Lichtsegmente erzeugt wird. Einzelne Lichtsegmente können dabei beispielsweise durch entsprechende Projektionsoptiken erzeugt werden, die jeweils einem Lichtsegment zugeordnet werden. Bei einer segmentweisen Erzeugung des Abbiegelichts muss dann nicht unbedingt der gesamte Bereich des Abbiegelichts gedimmt werden, sondern es brauchen nur diejenigen Lichtsegmente gedimmt zu werden, die sich mit der Boden-Lichtprojektion überschneiden.

Allerdings ist darauf hinzuweisen, dass eine Dimmung des Abbiegelichts während eines Blinkzyklus vorzugsweise nur in der Zeit erfolgt, in der sich die Lichtfunktion des Fahrtrichtungsanzeigers gerade in einem "An-Zustand" befindet und die mit diesem synchronisierte Boden-Lichtprojektion damit auch zeitgleich leuchtet. Befindet sich die Lichtfunktion des Fahrtrichtungsanzeigers hingegen gerade in einem "Aus-Zustand" und die Boden-Lichtprojektion leuchtet nicht, so muss das Abbiegelicht nicht unbedingt gedimmt werden bzw. gedimmt bleiben und kann während dieser Zeitdauer auch auf den maximalen Helligkeitswert hochgesetzt werden.

Eine solche Ausbildung trägt dazu bei, dass im Falle der Erzeugung der Boden-Lichtprojektion diese trotz gleichzeitiger Erzeugung der Lichtfunktion des Abbiegelichts besser wahrgenommen werden kann. Auf der anderen Seite muss auf die Erzeugung der Lichtfunktion des Abbiegelichts nicht gänzlich verzichtet werden.

Es wird erfindungsgemäß vorgeschlagen, dass bei gleichzeitiger Erzeugung der Lichtfunktion des Abbiegelichts und der Boden-Lichtprojektion wenigstens ein sich mit der Boden-Lichtprojektion überschneidender Teil des Abbiegelichts auf einen gedimmten Helligkeitswert niedrigerer Helligkeit gedimmt wird. Dies erfolgt derart dass der gedimmte Helligkeitswert auf die Umgebungshelligkeit abgestimmt wird. Durch die Abstimmung auf die Umgebungshelligkeit wird die Dimmung noch effektiver gestaltet.

So ist es denkbar, dass der gedimmte Helligkeitswert bei einer höheren Umgebungshelligkeit (z. B. Dämmerung) höher liegt als bei einer geringeren Umgebungshelligkeit (z. B. Einbruch der Nacht).

Mit anderen Worten leuchtet das Abbiegelicht bei Einbruch der Dämmerung dann heller als bei Einbruch der Nacht.

Allerdings ist es auch denkbar, dass die Boden-Lichtprojektion an die Umgebungshelligkeit angepasst wird. Beispielsweise kann die Boden-Lichtprojektion bei Dunkelheit (z.B. Nacht) in innerstädtischen Bereichen mit Straßenbeleuchtung auch heller sein als an einer Kreuzung auf dem Land.

Die Abstimmung auf die Umgebungshelligkeit kann bevorzugt auf folgende Art und Weise erfolgen:
Zum einen ist es denkbar, dass der gedimmte Helligkeitswert fortlaufend, besonders bevorzugt in Echtzeit an die Umgebungshelligkeit angepasst wird. Es erfolgt also ein ständiges Anpassen des Helligkeitswertes vom Abbiegelicht, wobei der Helligkeitswert mit steigender Umgebungshelligkeit ebenfalls steigt und mit fallender Umgebungshelligkeit ebenfalls sinkt.

Um den Steuerungsaufwand geringer halten zu können, ist es jedoch auch denkbar, dass der gedimmte Helligkeitswert derart an die Umgebungshelligkeit angepasst wird, dass bei Erreichen eines ersten Grenzwertes der Umgebungshelligkeit (z. B. bei Dämmerung) der Helligkeitswert zunächst auf einen ersten Wert (beispielsweise auf bis zu 80% der Maximalhelligkeit) und dann bei Erreichen eines zweiten, niedrigeren Grenzwertes der Umgebungshelligkeit (z. B. bei Einbruch der Nacht) auf einen zweiten Wert (beispielsweise auf bis zu 40% der Maximalhelligkeit) gesetzt wird. Der zweite, gedimmte Helligkeitswert ist also niedriger als der erste gedimmte Helligkeitswert.

Mit anderen Worten erfolgt bei dieser Weiterbildung nur eine zweistufige Anpassung des Helligkeitswertes vom Abbiegelicht, wobei die Helligkeit des Abbiegelichts mit sinkender Umgebungshelligkeit stufenweise herabgesetzt (gedimmt) wird.

Um die Boden-Lichtprojektion in ihrer Sichtbarkeit weiter zu verbessern, kann gemäß einer weiteren Ausbildung des Verfahrens die Boden-Lichtprojektion von einem Anfangszustand (z. B. einer Anfangsgröße oder einer Anfangsform) bis zu einem Endzustand (z. B. Endgröße oder Endform) dynamisch aufgebaut werden. Dabei kann eine Helligkeit der Boden-Lichtprojektion, beginnend mit einem Anfangswert zum Zeitpunkt des Anfangszustandes bis zu einem Maximum der Helligkeit zum Zeitpunkt des Endzustandes stetig erhöht werden.

Schließlich soll, wie erwähnt, mit der vorliegenden Erfindung auch ein Kraftfahrzeug zur Durchführung des Verfahrens vorgeschlagen werden. Hierbei wird von einem Kraftfahrzeug mit frontseitigen und mit heckseitigen Beleuchtungsvorrichtungen ausgegangen. Durch die Beleuchtungsvorrichtungen ist die Lichtfunktion eines Fahrtrichtungsanzeigers erzeugbar, wobei die Lichtfunktion des Fahrtrichtungsanzeigers durch Betätigung eines Betätigungselementes erzeugbar ist. Ferner ist eine Beleuchtungsvorrichtung zur Erzeugung der Lichtfunktion eines Abbiegelichts vorhanden.

Die zuvor erwähnten Lichtfunktionen können durch Beleuchtungsvorrichtungen in einem Gehäuse realisiert sein. Es ist aber auch denkbar, dass die einzelnen Lichtfunktionen durch mehrere Beleuchtungsvorrichtungen in separaten Gehäusen realisiert sind.

Das Kraftfahrzeug weist ferner wenigstens einen Lichtsensor auf. Der Lichtsensor kann beispielsweise als Regen-/Lichtsensor ausgebildet sein. Der wenigstens eine Lichtsensor ist signaltechnisch mit der Beleuchtungsvorrichtung zur Erzeugung der Lichtfunktion des Abbiegelichts verknüpft. Des Weiteren ist wenigstens eine Vorrichtung zur Erzeugung einer Boden-Lichtprojektion vorhanden.

Die vorgenannten Beleuchtungsvorrichtungen und die Vorrichtung zur Erzeugung einer Boden-Lichtprojektion können unterschiedliche Optikkonzepte umfassen. Beispielsweise können Reflektoren, Linsen, Lichtleiter, Projektionssysteme und unterschiedliche Lichtquellen zum Einsatz kommen. Auch eine Mischung dieser Optikkonzepte ist denkbar.

Das Kraftfahrzeug ist erfindungsgemäß nun dadurch gekennzeichnet, dass die Vorrichtung zur Erzeugung einer Boden-Lichtprojektion ebenfalls signaltechnisch mit wenigstens einem Lichtsensor verbunden ist. Der wenigstens eine Lichtsensor kann vorzugsweise derselbe Lichtsensor sein, mit dem auch die Beleuchtungsvorrichtung zur Erzeugung der Lichtfunktion des Abbiegelichts signaltechnisch verknüpft ist. Des Weiteren ist eine Steuer- und Auswerteeinrichtung zur Auswertung von Signalen des wenigstens einen Lichtsensors vorhanden.

Durch die Steuer- und Auswerteeinrichtung sind in Abhängigkeit der Signale des wenigstens einen Lichtsensors sowohl die Vorrichtung zur Erzeugung der Boden-Lichtprojektion als auch die Beleuchtungsvorrichtung zur Erzeugung der Lichtfunktion eines Abbiegelichtes ansteuerbar.

Auf Grund dieser Merkmale werden die Voraussetzungen geschaffen, dass das Kraftfahrzeug zur Durchführung des Verfahrens geeignet ist.

Bevorzugte Ausführungsbeispiele der Erfindung sind in den Figuren dargestellt und werden anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können. Wird der Begriff "und/oder" in einer Aufzählung aus zwei oder mehr Begriffen bzw. Gegenständen verwendet, so kann dies bedeuten, dass ein beliebiger der aufgezählten Begriffe bzw. Gegenstände allein verwendet werden kann. Es kann auch bedeuten, dass eine beliebige Kombination aus zwei oder mehr der aufgezählten Begriffe bzw. Gegenstände verwendet werden kann.

Es zeigen, jeweils schematisch
- Fig. 1a: die Darstellung eines Kraftfahrzeugs aus der Vogelperspektive, mit eingeschaltetem Abbiegelicht,
- Fig. 1b: die Darstellung des Kraftfahrzeugs aus der Vogelperspektive, mit eingeschaltetem Fahrtrichtungsanzeiger und mit eingeschalteter Boden-Lichtprojektion,
- Fig. 1c: die Darstellung des Kraftfahrzeugs aus der Vogelperspektive, wobei Fahrtrichtungsanzeiger, Boden-Lichtprojektion und Abbiegelicht aktiviert sind,
- Fig. 2: ein Signaldiagramm zur Erläuterung einer möglichen Ausprägung des Verfahrens,
- Fig. 3: ein weiteres Signaldiagramm, zur Erläuterung einer weiteren Ausprägung des Verfahrens,
- Fig. 4: eine Beleuchtungsvorrichtung zur Erzeugung eines Abbiegelichts sowie einer Boden-Lichtprojektion, in einer ersten Ausführungsform,
- Fig. 5: eine Beleuchtungsvorrichtung zur Erzeugung eines Abbiegelichts und einer Boden-Lichtprojektion, in einer zweiten Ausführungsform,
- Fig. 6: eine Beleuchtungsvorrichtung zur Erzeugung eines Abbiegelichts und einer Boden-Lichtprojektion in einer dritten Ausführungsform und
- Fig. 7: ein Signalflussplan zur Erläuterung der signaltechnischen Verbindung zwischen verfahrensgemäß beteiligten Komponenten des Kraftfahrzeugs

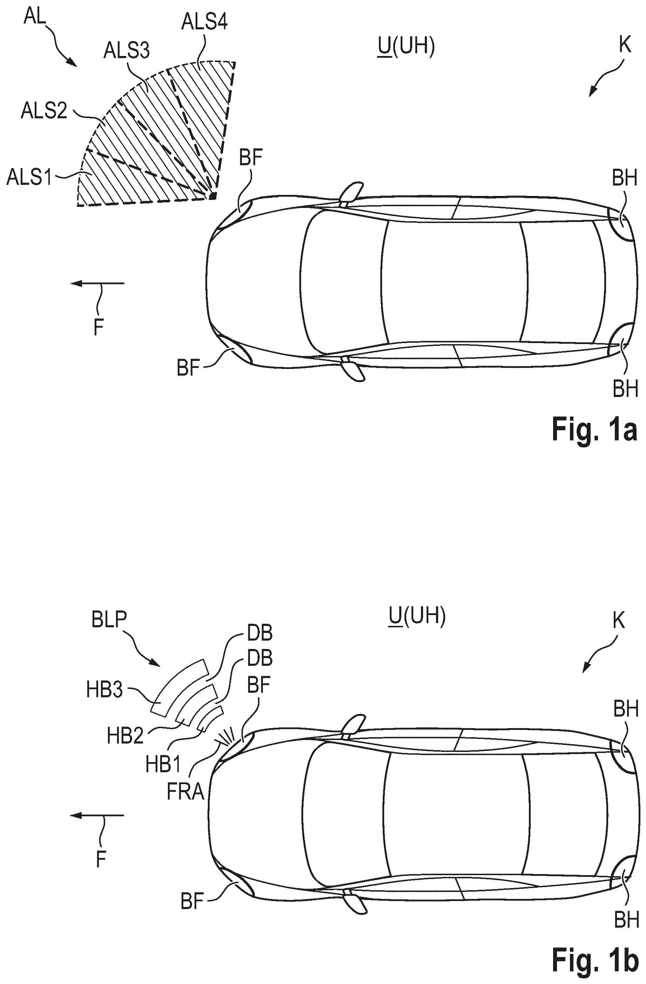

In der Fig. 1a ist ein Kraftfahrzeug K zur Durchführung des Verfahrens dargestellt. Das Kraftfahrzeug K weist frontseitige Beleuchtungseinrichtungen BF und heckseitige Beleuchtungsvorrichtung BH auf. Die frontseitigen Beleuchtungsvorrichtungen BF können beispielsweise als Scheinwerfer ausgebildet sein, während die heckseitigen Beleuchtungsvorrichtungen BH als Heckleuchten ausgebildet sein können. Das Kraftfahrzeug K fährt in einer gewöhnlichen Fahrtrichtung F, also vorwärts.

Mit U ist eine Umgebung des Kraftfahrzeugs K beziffert, wobei die Umgebung U eine bestimmte Umgebungshelligkeit UH aufweist.

In der Figur ist ein Zustand dargestellt, in dem ein Abbiegelicht AL aktiviert wurde. Das Abbiegelicht AL kann aus mehreren Segmenten bestehen. Im Ausführungsbeispiel weist das Abbiegelicht AL vier Segmente ALS1 bis ALS4 auf. Es ist aber auch denkbar, dass das Abbiegelicht nicht in mehrere Segmente unterteilt oder unterteilbar ist.

Bekanntermaßen wird ein Abbiegelicht dann aktiviert, wenn ein Lenkrad eines Kraftfahrzeugs K einen bestimmten Lenkwinkel übersteigt und/oder wenn ein Betätigungselement für einen Fahrtrichtungsanzeiger (bspw. Blinkerhebel am Lenkstock) betätigt wurde. Zusätzlich muss eine Geschwindigkeit des Kraftfahrzeugs K einen bestimmten Grenzwert (beispielsweise 40 km/h) unterschreiten.

Aus der Fig. 1b ist das Kraftfahrzeug K in einem solchen Zustand ersichtlich, in dem ein Betätigungselement für einen Fahrtrichtungsanzeiger betätigt und damit die Lichtfunktion eines Fahrtrichtungsanzeigers FRA aktiviert wurde.

Des Weiteren ist erkennbar, dass durch das Kraftfahrzeug K zusätzlich eine Boden-Lichtprojektion BLP erzeugt wird. Die Boden-Lichtprojektion BLP besteht aus mehreren hellen Bereichen und kann beispielsweise drei helle Bereiche HB1 bis HB3 aufweisen.

Im Ausführungsbeispiel ist jeder der hellen Bereiche HB1 bis HB3 als Teil eines Kreisrings ausgebildet, wobei die Größe der hellen Bereiche, beginnend vom hellen Bereich HB1 bis zum hellen Bereich HB3 vorzugsweise stetig zunimmt. Zwischen den hellen Bereichen HB1 bis HB3, welche zueinander beabstandet sind, sind dunkle Bereiche DB ausgebildet. Durch das Abwechseln von dunklen und hellen Bereichen wird der Kontrast und damit die Sichtbarkeit der Boden-Lichtprojektion BLP weiter verbessert.

Abweichend vom Ausführungsbeispiel sind auch andere Formen und/oder eine andere Anzahl der hellen Bereiche HB1 bis HB3 denkbar.

Beispielsweise ist vorstellbar, dass mehrere, beispielsweise drei helle Bereiche als Viertelkreise oder als Dreiecke ausgebildet sind, welche zueinander beabstandet sind und zwischen denen wiederum dunkle Bereiche ausgebildet werden. Diese können so zueinander angeordnet sein, dass sich daraus eine Richtungsangabe erkennen lässt.

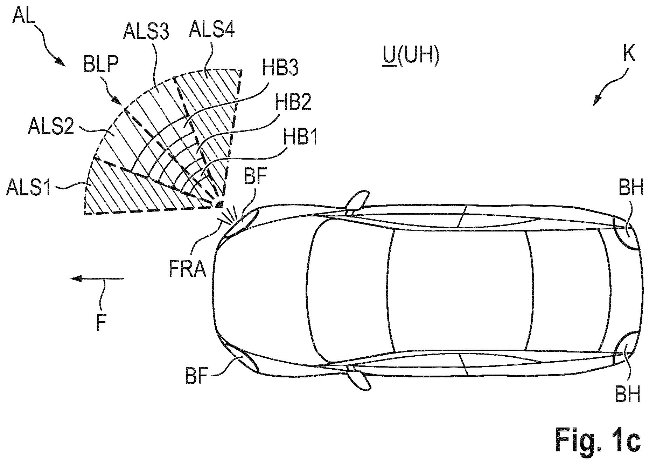

Aus der Fig. 1c ist schließlich das Kraftfahrzeug K in einem solchen Zustand ersichtlich, bei dem sowohl die Lichtfunktion eines Fahrtrichtungsanzeigers FRA mitsamt einer Boden-Lichtprojektion BLP als auch die Lichtfunktion des Abbiegelichts AL aktiviert sind. Beispielhaft sind in den Figuren die Lichtfunktionen nur für eine rechte, frontseitige Beleuchtungsvorrichtung BF dargestellt.

In diesem Zusammenhang ist zu erwähnen, dass die Boden-Lichtprojektion BLP eine gesetzlich nicht vorgeschriebene, optische Unterstützung der gesetzlich vorgeschriebenen Lichtfunktion des Fahrtrichtungsanzeigers FRA darstellt. Dabei wird die Boden-Lichtprojektion BLP in unmittelbarer Nähe des Kraftfahrzeugs K auf der Seite des aktivierten Fahrtrichtungsanzeigers FRA erzeugt.

*In unmittelbarer Nähe* soll im Sinne der vorliegenden Erfindung bedeuten, dass die Boden-Lichtprojektion BLP maximal nur wenige Meter vom Kraftfahrzeug K entfernt auf dem Boden projiziert wird.

Es ist beispielsweise denkbar, dass die Boden-Lichtprojektion BLP etwa 70-100 cm entfernt auf den Boden projiziert wird, so dass beim Abbiegen über einen Rad- oder Fußweg, schwächere Verkehrsteilnehmer früher über das Abbiegen informiert werden.

Anhand der Fig. 1c soll ferner durch eine breitere Schraffierung verdeutlicht werden, dass diejenigen Segmente (hier ALS2 und ALS3) des Abbiegelichts AL, welche sich mit der Boden-Lichtprojektion BLP auf dem Boden überschneiden, in ihrer Helligkeit auf eine niedrigere Helligkeit gedimmt werden. Auf diese Weise soll die Wahrnehmbarkeit beziehungsweise Sichtbarkeit der Boden-Lichtprojektion BLP trotz eingeschaltetem Abbiegelicht AL verbessert werden.

Im Ausführungsbeispiel sind die Segmente ALS1 und ALS4 des Abbiegelichts AL nicht gedimmt. Dies ist, abweichend vom Ausführungsbeispiel jedoch durchaus ebenfalls denkbar.

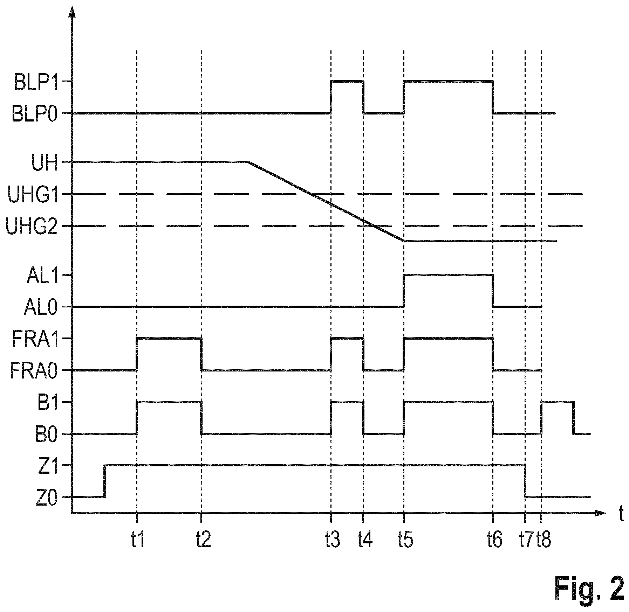

Es ist wichtig, darauf hinzuweisen, dass die Boden-Lichtprojektion BLP nur dann erzeugt wird, wenn die Umgebungshelligkeit U des Kraftfahrzeugs K einen bestimmten Grenzwert unterschreitet. Dies soll anhand der Fig. 2 näher erläutert werden. In dem ersichtlichen Diagramm ist eine Vielzahl von Größen über der Zeit t aufgetragen:
So ist zunächst eine Zündung des Kraftfahrzeugs K ausgeschaltet (Z0) und wird zu einem späteren Zeitpunkt eingeschaltet (Z1).

Die Umgebungshelligkeit UH weist einen Wert auf, der über einem bestimmten oder bestimmbaren ersten Grenzwert UHG1 und einem bestimmten oder bestimmbaren zweiten Grenzwert UHG2 liegt. Es sei angenommen, dass der erste Grenzwert UHG1 der Umgebungshelligkeit UH einer größeren Helligkeit entspricht als der zweite Grenzwert UHG2.

Zu einem Zeitpunkt t1 wird ein Betätigungselement zur Erzeugung der Lichtfunktion des Fahrtrichtungsanzeigers FRA betätigt (B1), so dass zu diesem Zeitpunkt der Fahrtrichtungsanzeiger FRA von einem unbetätigten Zustand (FRA0 = Fahrtrichtungsanzeiger aus) zu einem aktivierten Zustand (FRA1 = Fahrtrichtungsanzeiger ein) wechselt.

Die Erzeugung der Boden-Lichtprojektion BLP wird jedoch verfahrensbedingt beziehungsweise steuerungstechnisch von der Unterschreitung des ersten Grenzwertes UHG1 der Umgebungshelligkeit UH abhängig gemacht.

Dies hat zur Folge, dass zum Zeitpunkt t1 die Boden-Lichtprojektion BLP nicht aktiviert wird (BLP0 = Boden-Lichtprojektion aus).

Durch die Abhängigkeit der Erzeugung der Boden-Lichtprojektion BLP von der Umgebungshelligkeit, also von der Unterschreitung des Grenzwertes UHG1, kann eine gute Wahrnehmbarkeit der Boden-Lichtprojektion BLP im Falle ihrer Aktivierung gewährleistet werden. Zum Zeitpunkt t2 wird der Fahrtrichtungsanzeiger FRA wieder deaktiviert (FRA0 = Fahrtrichtungsanzeiger aus). Dies kann daran liegen, dass ein bestimmter Lenkwinkel des Lenkrades vom Kraftfahrzeug K wieder unterschritten wurde und das Betätigungselement zurückgesetzt hat (B0) oder dass eine Nachblinkfunktion des Fahrtrichtungsanzeigers nach einer einmaligen Betätigung des Betätigungselementes für den Fahrtrichtungsanzeiger beendet ist (nicht näher dargestellt).

Zu einem Zeitpunkt t3 wird abermals der Fahrtrichtungsanzeiger FRA durch Betätigung eines Betätigungselementes (B1) aktiviert (FRA1). Zu diesem Zeitpunkt ist die Umgebungshelligkeit UH bereits unter den ersten Grenzwert UHG1 gefallen. Daher wird zu diesem Zeitpunkt ebenfalls die Boden-Lichtprojektion BLP (vgl. Fig. 1b) bereits erzeugt (BLP1 = Boden-Lichtprojektion ein). Die Boden-Lichtprojektion BLP wird erst dann wieder inaktiviert (BLP0), wenn auch die Lichtfunktion des Fahrtrichtungsanzeigers FRA zu einem Zeitpunkt t4 wieder deaktiviert wurde (FRA0).

Zu einem Zeitpunkt t5 erfolgt eine neue Aktivierung der Lichtfunktion des Fahrtrichtungsanzeigers (FRA1). Zu diesem Zeitpunkt ist jedoch auch die Umgebungshelligkeit UH unter den zweiten Grenzwert UHG2 gefallen. Somit wird zusammen mit der Lichtfunktion des Fahrtrichtungsanzeigers FRA auch die Boden-Lichtprojektion BLP erzeugt (BLP1).

Auch die Lichtfunktion des Abbiegelichts AL ist mit der Umgebungshelligkeit UH verknüpft. Allerdings ist die Erzeugung des Abbiegelichts AL mit dem zweiten Grenzwert UHG2 verknüpft, welcher niedriger liegt als der erste Grenzwert UHG1 der Umgebungshelligkeit UH.

Da zum Zeitpunkt t5 jedoch auch bereits der zweite Grenzwert UHG2 erreicht beziehungsweise unterschritten wurde, wird hier zusätzlich (bei Vorliegen der sonstigen Voraussetzungen) die Lichtfunktion des Abbiegelichts AL aktiviert (Schaltung von AL0 = Abbiegelicht aus auf AL1 = Abbiegelicht ein).

Dies hält so lange an, bis zu einem Zeitpunkt t6 die Lichtfunktion des Fahrtrichtungsanzeigers FRA wieder deaktiviert wird (FRA0).

Zum Zeitpunkt t7 wird das Kraftfahrzeug K in einen nicht betriebs- beziehungsweise nicht fahrbereiten Zustand versetzt, indem die Zündung des Kraftfahrzeugs K wieder ausgestellt wird (Z0 = Zündung aus). Gleichbedeutend hiermit ist bei Elektrofahrzeugen die Entkopplung eines Hochvoltkreises von der Traktionsbatterie des Fahrzeugs.

Dies hat zur Folge, dass trotz der Betätigung des Betätigungselementes für den Fahrtrichtungsanzeiger (B1) zum Zeitpunkt t8 weder die Lichtfunktion des Fahrtrichtungsanzeigers FRA noch die Boden-Lichtprojektion BLP noch das Abbiegelicht AL aktiviert werden.

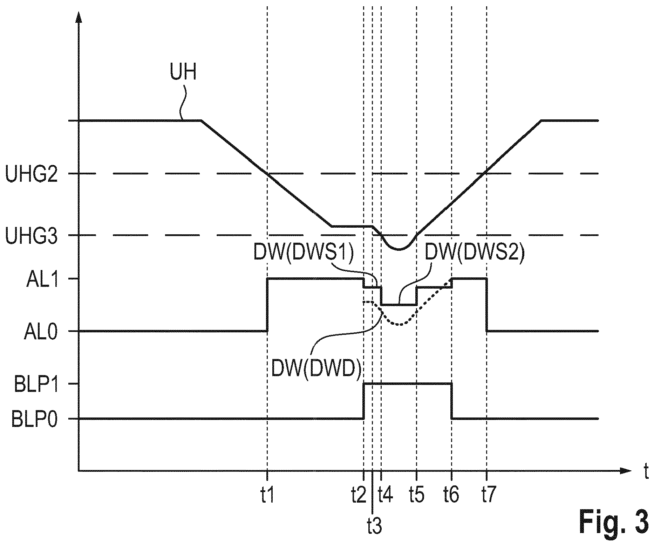

Anhand der Fig. 3 soll verdeutlicht werden, wie bei gleichzeitiger Aktivierung des Abbiegelichts AL und der Boden-Lichtprojektion BLP (vergleiche Fig. 1c) eine Dimmung des Abbiegelichts AL auf einen Helligkeitswert mit niedrigerer Helligkeit des Abbiegelichts AL erfolgen kann.

In dieser Darstellung soll das aktivierte Abbiegelicht (AL1) auch eine maximale Helligkeit des Abbiegelichts versinnbildlichen. Bewegt sich die Darstellung des Abbiegelichts in Richtung des ausgeschalteten Abbiegelichts (AL0), so soll dies eine Dimmung der Helligkeit des Abbiegelichts AL hin zu einem niedrigeren Helligkeitswert verdeutlichen und umgekehrt.

Es sei angenommen, dass zum Zeitpunkt t1 bestimmte Voraussetzungen zur Aktivierung des Abbiegelichts AL (bspw. niedrige Fahrgeschwindigkeit und bestimmter Lenkwinkeleinschlag vorhanden) bereits erfüllt sind. Des Weiteren ist erkennbar, dass zum Zeitpunkt t1 auch der zweite Grenzwert UHG2 der Umgebungshelligkeit UH bereits erreicht, beziehungsweise unterschritten ist. Dies hat zur Folge, dass zum Zeitpunkt t1 auch das Abbiegelicht AL aktiviert wird (AL1, vergleiche auch Fig. 1a).

Es sei angenommen, dass zum Zeitpunkt t2 auch die Voraussetzungen zur Erzeugung der Boden-Lichtprojektion BLP vorliegen und diese aktiviert wird (BLP1).

Bei gleichzeitiger Aktivierung des Abbiegelichts AL und der Boden-Lichtprojektion BLP (vergleiche auch Fig. 1c) wird zur Gewährleistung einer besseren Sichtbarkeit der Boden-Lichtprojektion BLP jedoch das Abbiegelicht AL in seiner Helligkeit gedimmt. Beispielsweise ist denkbar, dass lediglich die sich mit der Boden-Lichtprojektion BLP überschneidenden Segmente ALS2 und ALS3 auf einen niedrigeren Helligkeitswert gedimmt werden. Dies ist in der Fig. 1c durch eine weniger dichte Schraffierung in diesen Segmenten angedeutet.

Anhand der Fig. 3 ist nun erkennbar, dass zum Zeitpunkt t2, zu dem sowohl das Abbiegelicht AL als auch die Boden-Lichtprojektion BLP aktiviert sind (AL1 und BLP1), eine Dimmung der Helligkeit des Abbiegelichts AL auf einen niedrigeren Helligkeitswert DW erfolgt. Der gedimmte Helligkeitswert DW liegt also geringer als der maximal mögliche Helligkeitswert des Abbiegelichts AL.

Es sind zwei Möglichkeiten zur Dimmung dargestellt:
Zum einen ist es denkbar, das Abbiegelicht AL, insbesondere die Segmente ALS2 und ALS3, welche sich mit der Boden-Lichtprojektion BLP überschneiden, auf einen niedrigeren Helligkeitswert (DW = DWS1) statisch zu dimmen.

Eine derartige Dimmung kann auch in mehreren, beispielsweise zwei Stufen erfolgen. So ist denkbar, dass zum Zeitpunkt t2 das Abbiegelicht AL zunächst auf einen ersten Helligkeitswert DWS1 statisch gedimmt wird und bei Unterschreiten oder Erreichen eines weiteren, hier dritten Grenzwertes UHG3 der Umgebungshelligkeit UH zu einem Zeitpunkt t4 eine weitere Dimmung DW auf einen noch niedrigeren Helligkeitswert DWS2 erfolgt. Der dritte (vorzugsweise ebenfalls bestimmbare Grenzwert UHG3 entspricht einer noch niedrigeren Umgebungshelligkeit UH als der zweite Grenzwert UHG2.

Beispielsweise ist denkbar, dass der zweite Grenzwert UHG2 durch eine einsetzende Dämmerung und der dritte Grenzwert UHG3 durch einen Einbruch der Nacht gebildet wird.

Mit anderen Worten wird das Abbiegelicht AL zum Zeitpunkt t2 zunächst auf den ersten, gedimmten Helligkeitswert DWS1 gedimmt und bei dunkler werdender Umgebungshelligkeit UH, konkret bei Unterschreiten des Grenzwertes UHG3 zum Zeitpunkt t4 noch weiter auf den zweiten, niedrigeren Helligkeitswert DWS2 abgesenkt. Analog wird zu einem Zeitpunkt t5, in dem der Grenzwert UHG3 wieder erreicht wird, der Helligkeitswert DW wieder auf den höheren, ersten Helligkeitswert DWS1 angehoben.

Zum Zeitpunkt t6, in dem die Boden-Lichtprojektion BLP deaktiviert wird (BLP0) wird bei vorliegenden sonstigen Voraussetzungen das Abbiegelicht AL wieder auf die maximale Helligkeit (AL1) angehoben. Fällt allerdings zum Zeitpunkt t7 eine Voraussetzung zur Erzeugung des Abbiegelichts AL weg (hier Überschreiten des zweiten Grenzwertes UHG2 der Umgebungshelligkeit UH), so wird auch das Abbiegelicht AL wieder deaktiviert (AL0).

Alternativ zur statischen Einstellung eines gedimmten Helligkeitswertes ist es auch denkbar, den gedimmten Helligkeitswert DW dynamisch, also fortlaufend an die Umgebungshelligkeit UH anzupassen.

Dies setzt einen höheren Steuerungsaufwand voraus und ist anhand der Punktlinie angedeutet, der den möglichen Verlauf eines dynamisch eingestellten, gedimmten Helligkeitswertes DWD zeigen soll.

So zeigt zu einem Zeitpunkt t3 der Verlauf der Umgebungshelligkeit UH eine weitere Absenkung. Gleichzeitig wird auch der Helligkeitswert DWD analog zum Verlauf der Umgebungshelligkeit UH nach unten in Richtung einer niedrigeren Helligkeit verschoben. Der Verlauf des Helligkeitswertes DWD wird so lange analog zum Verlauf der Umgebungshelligkeit UH nachgeführt, bis zu einem Zeitpunkt t6 die Boden-Lichtprojektion BLP eingestellt und somit wieder die maximale Helligkeit des Abbiegelichts (AL1) erzeugt wird. Erst bei Erreichen oder Überschreiten des Grenzwertes UHG2 der Umgebungshelligkeit UH wird auch das Abbiegelicht AL deaktiviert (AL0).

Auf diese Weise kann bei gleichzeitiger Einschaltung des Abbiegelichts AL und der Boden-Lichtprojektion BLP durch eine statische oder auch dynamische Dimmung des Abbiegelichts AL die Wahrnehmbarkeit beziehungsweise Sichtbarkeit der Boden-Lichtprojektion BLP deutlich verbessert werden.

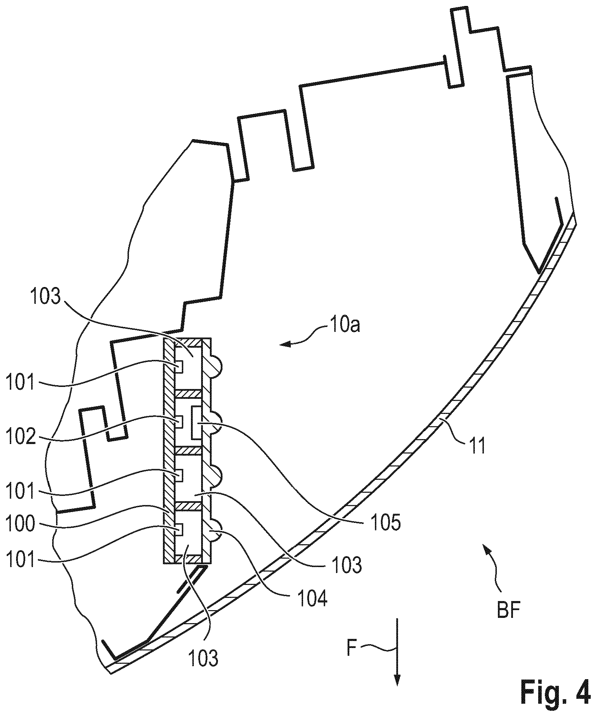

In der Fig. 4 ist nun eine Beleuchtungsvorrichtung 10a dargestellt, durch welche ein kompakt montierbares Lichtmodul ausgebildet ist. Die Beleuchtungsvorrichtung 10a umfasst eine Platine 100, auf der mehrere Leuchtdioden 101 zur Erzeugung des Abbiegelichts AL und wenigstens eine Leuchtdiode 102 zur Erzeugung der Boden-Lichtprojektion BLP vorhanden sind. Die Leuchtdioden 101 senden vorzugsweise weißes Licht aus, während die Leuchtdiode 102 vorzugsweise gelbes Licht aussendet. Die Leuchtdioden 101, 102 sind durch eine Gehäusestruktur derart voneinander lichtdicht getrennt, dass sich mehrere Lichtkammern 103 ausbilden. In einer Lichtabstrahlrichtung sind die Lichtkammern 103 durch Linsen 104 oder vergleichbare Optikelemente abgedeckt. Durch die Lichtkammern 103 mit den Leuchtdioden 101 können Segmente des Abbiegelichts AL erzeugt werden. Zu diesem Zweck ist eine entsprechende sequenzielle Ansteuerung der Leuchtdioden 101 notwendig. Beispielsweise ist denkbar, die Zuschaltung der einzelnen Segmente ALS1 bis ALS4 (vergleiche Fig. 1a) von einem erfassten Lenkwinkelsensor abhängig zu machen. Die Lichtkammer 103 mit der Leuchtdiode 102 umfasst auch eine Projektionseinheit 105, welche zur Erzeugung der Boden-Lichtprojektion BLP dient.

Die Projektionseinheit 105 kann z. B. durch ein sogenanntes Grafical Optical Blackout (Gobo) gebildet sein, wobei die Projektion ähnlich einer Diaprojektion beziehungsweise als Schattenprojektion erfolgt. Die Projektionseinheit 105 kann als auch als Micro Lens Array (MLA) ausgebildet sein. Auch der Einsatz eines dynamischen Imagers (durchleuchtbares LCD-Element) ist denkbar.

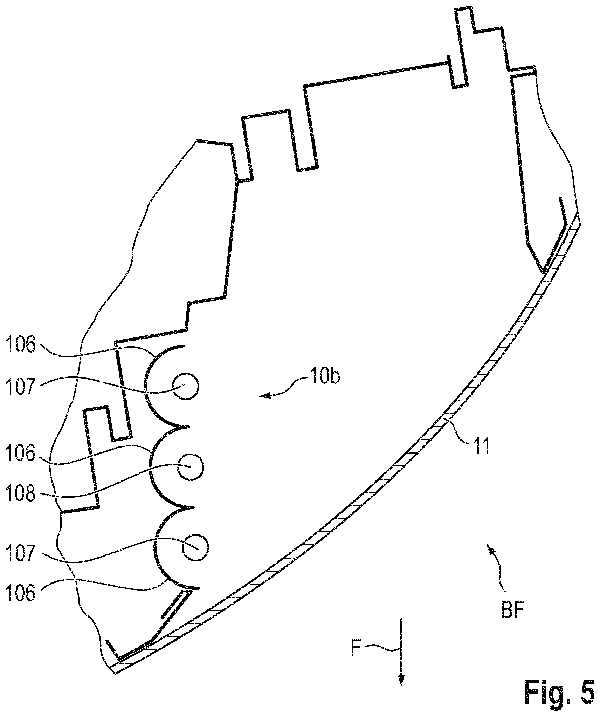

Die Beleuchtungsvorrichtung 10a ist vorzugsweise im Gehäuse der frontseitigen Beleuchtungsvorrichtungen BF angeordnet und montiert, wobei die Position der Beleuchtungsvorrichtung 10a im Gehäuse vorzugsweise weiter zur Mitte, also hin zu einem Kühlergrill des Kraftfahrzeugs K positioniert ist als Leuchtmittel für das Abblend- und Fernlicht (nicht dargestellt). In den vorliegenden Ausführungsbeispielen (Fig. 5 bis 7) handelt es sich bei der frontseitigen Beleuchtungsvorrichtung BF um den in Fahrtrichtung gesehenen linken, vorderen Scheinwerfer. Dieser ist nach vorne in Fahrtrichtung F durch eine Lichtscheibe 11 abgedeckt.

Aus Fig. 5 ist eine weitere Variante einer Beleuchtungsvorrichtung 10b ersichtlich, welche analog zur vorherigen Figur im Gehäuse der frontseitigen Beleuchtungseinrichtung BF verbaut ist.

Im Unterschied zur Beleuchtungsvorrichtung 10a weist die Beleuchtungsvorrichtung 10b mehrere Lichtquellen 107 zur Erzeugung eines weißen Abbiegelichts AL und eine Lichtquelle 108 zur Erzeugung der gelben Bodenlicht-Projektion BLP auf. Den Lichtquellen 107 und 108 sind jeweils Reflektoren 106 zugeordnet. Die Reflektoren 106 sind vorzugsweise als Freiformreflektoren ausgebildet, mit denen die durch die Lichtquellen 107, 108 erzeugten Lichtstrahlen exakt in die gewünschten Richtungen reflektiert werden können.

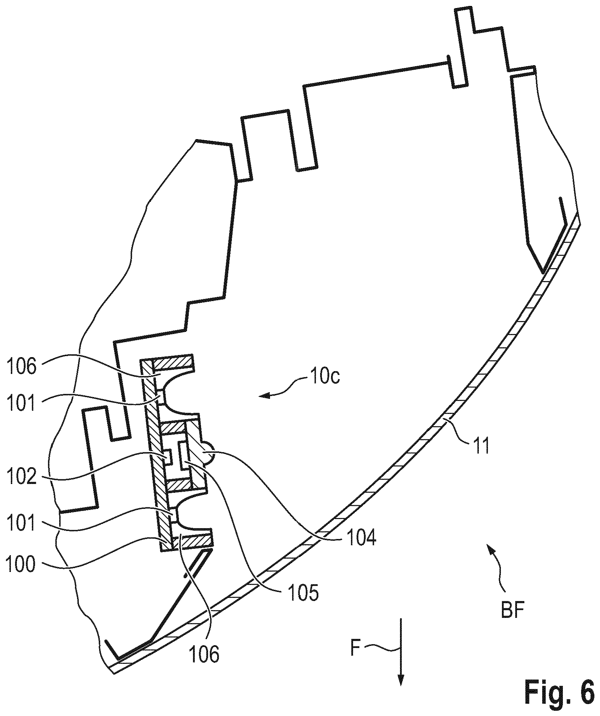

Schließlich ist in Fig. 6 eine Beleuchtungsvorrichtung 10c dargestellt, die aus einer Kombination der in den beiden vorhergehenden Figuren gezeigten Lösungen gebildet ist. So ist eine Platine 100 vorhanden, auf der weißes Licht aussende Leuchtdioden 101 und eine, gelbes Licht aussendende Leuchtdiode 102 angeordnet ist. Den Leuchtdioden 101 ist jeweils ein vorzugsweise als Freiformreflektor ausgebildeter Reflektor 106 zugeordnet. Die Leuchtdiode 102 ist wiederum Bestandteil einer Projektionseinheit 105, mit einer nachgeschalteten Linse 104 als Abschlussoptik.

Abweichend vom Ausführungsbeispiel ist es auch denkbar, dass die Beleuchtungsvorrichtungen 10a bis 10c nicht im Gehäuse der frontseitigen Beleuchtungsvorrichtung BF, sondern separat davon als eigenständige Lichtmodule am Kraftfahrzeug K verbaut sind.

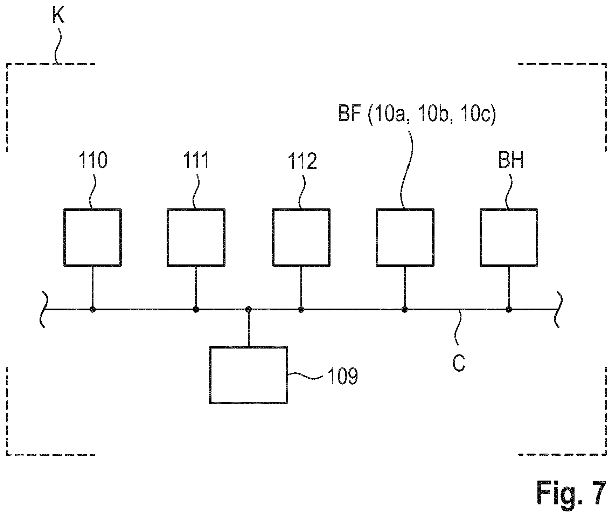

Schließlich ist in der Fig. 7 dargestellt, wie die für das Verständnis der Erfindung wesentlichen Komponenten signaltechnisch miteinander verbunden sind.

So ist ein Lichtsensor 110 ersichtlich, der vorzugsweise als Regen-/Lichtsensor des Kraftfahrzeugs K ausgebildet ist. Der Lichtsensor 110 dient zur Erfassung der Umgebungshelligkeit UH der Umgebung U (vergleiche Fig. 1a bis 1c).

Des Weiteren ist eine Eingabe- und Anzeigevorrichtung 111 ersichtlich, welche vorzugsweise als berührungsempfindlicher Touchscreen ausgebildet sein kann. Die Eingabe- und Anzeigevorrichtung 111 kann beispielsweise dazu dienen, benutzerseitig bevorzugte Einstellungen vorzunehmen. Über die Eingabe- und Anzeigevorrichtung 111 kann der Benutzer beispielsweise die erwähnten Grenzwerte UHG1 bis UHG3 der Umgebungshelligkeit UH und/oder die Höhe der statisch gedimmten Helligkeitswerte DWS1, DWS2 (vgl. Fig. 3) festlegen.

Ferner ist ein Betätigungselement 112 dargestellt, welches zur benutzerseitigen Betätigung des Fahrtrichtungsanzeigers FRA dient. Das Betätigungselement 112 kann vorzugsweise als Betätigungshebel am Lenkstock des Kraftfahrzeugs K ausgebildet sein. Schließlich ist noch eine Auswerte- und Steuereinrichtung 109 vorhanden, welche die von den besagten Komponenten erzeugten Signale erfasst und auswertet. In Abhängigkeit der erfassten Signale steuert die Auswerte- und Steuereinrichtung 109 sowohl die frontseitigen Beleuchtungsvorrichtungen BF beziehungsweise die darin befindlichen Beleuchtungsvorrichtungen 10a, 10b oder 10c und analog dazu die heckseitigen Beleuchtungsvorrichtungen BH an. Die besagten Komponenten sind über einen Datenbus C signaltechnisch miteinander verbunden, der vorzugsweise als CAN-Bus ausgebildet sein kann.

### Bezugszeichenliste

- AL: Abbiegelicht
- ALS1-ALS4: Segmente des Abbiegelichts
- AL0: Abbiegelicht aus
- AL1: Abbiegelicht ein
- B0: Betätigungselement für Fahrtrichtungsanzeiger nicht betätigt
- B1: Betätigungselement für Fahrtrichtungsanzeiger betätigt
- BH: heckseitige Beleuchtungsvorrichtungen
- BLP: Boden-Lichtprojektion
- BLP0: Boden-Lichtprojektion aus
- BLP1: Boden-Lichtprojektion ein
- BF: frontseitige Beleuchtungsvorrichtungen
- C: Datenbus, CAN-Bus
- DB: dunkle Bereiche der Boden-Lichtprojektion
- DW: gedimmter Helligkeitswert
- DWS1, DWS2: gedimmte Helligkeitswerte
- DWD: gedimmte Helligkeitswerte
- f, f1, f2: Blinkfrequenz des Fahrtrichtungsanzeigers
- F: Fahrtrichtung
- FRA0: Fahrtrichtungsanzeiger aus
- FRA1: Fahrtrichtungsanzeiger ein
- HB1-HB3: helle Bereiche der Boden-Lichtprojektion
- K: Kraftfahrzeug
- t: Zeit
- t1-t8: Zeitpunkte
- U: Umgebung
- UH: Umgebungshelligkeit
- UHG1: erster Grenzwert der Umgebungshelligkeit
- UHG2: zweiter Grenzwert der Umgebungshelligkeit
- UHG3: zweiter Grenzwert der Umgebungshelligkeit
- Z0: Zündung aus (Fahrzeug nicht betriebsbereit)
- Z1: Zündung ein (Fahrzeug betriebsbereit)
- 10a, 10b, 10c: Beleuchtungsvorrichtung, Lichtmodul
- 11: Lichtscheibe
- 100: Platine
- 101: Leuchtdioden
- 102: Leuchtdiode
- 103: Lichtkammern
- 104: Linsen
- 105: Projektionseinheit
- 106: Reflektoren
- 107: Lichtquellen
- 108: Lichtquelle
- 109: Auswerte- und Steuereinrichtung
- 110: Lichtsensor
- 111: Eingabe- und Anzeigevorrichtung
- 112: Betätigungselement

## Patentansprüche

1. Verfahren zur Erzeugung der Lichtfunktion eines Fahrtrichtungsanzeigers (FRA) bei einem Kraftfahrzeug (K), wobei eine Aktivierung der Lichtfunktion des Fahrtrichtungsanzeigers (FRA) dann erfolgt, wenn sich das Kraftfahrzeug (K) in einem betriebsbereiten Zustand befindet und im Kraftfahrzeug (K) ein Betätigungselement (112)betätigt wird, wobei zusätzlich zur Erzeugung der Lichtfunktion des Fahrtrichtungsanzeigers (FRA) eine Boden-Lichtprojektion (BLP) in unmittelbarer Nähe des Kraftfahrzeugs (K) erzeugt werden kann, wobei die Boden-Lichtprojektion (BLP) nur dann erzeugt wird, wenn eine Umgebungshelligkeit (UH) des Kraftfahrzeugs (K) einen bestimmten Grenzwert (UHG1) unterschreitet, wobei der Grenzwert (UHG1) der Umgebungshelligkeit (UH) zur Erzeugung der Boden-Lichtprojektion (BLP) von einem Grenzwert (UHG2) der Umgebungshelligkeit (UH) zur Erzeugung der Lichtfunktion eines Abbiegelichts (AL) abweicht , **dadurch gekennzeichnet, dass** bei gleichzeitiger Erzeugung der Lichtfunktion des Abbiegelichts (AL) und der Boden-Lichtprojektion (BLP) wenigstens ein sich mit der Boden-Lichtprojektion (BLP) überschneidender Teil des Abbiegelichts (AL) auf einen Helligkeitswert (DW, DWD, DWS1, DWS2) mit niedrigerer Helligkeit gedimmt wird, derart, dass der Helligkeitswert (DW, DWD, DWS1, DWS2) auf die Umgebungshelligkeit (UH) abgestimmt wird.

2. Verfahren nach Anspruch 1, **dadurch gekennzeichnet, dass** der Grenzwert (UHG1) zur Erzeugung der Boden-Lichtprojektion (BLP) einer höheren Umgebungshelligkeit (UH) entspricht als der Grenzwert (UHG2) zur Erzeugung der Lichtfunktion des Abbiegelichts (AL).

3. Verfahren nach einem der vorhergehenden Ansprüche, **dadurch gekennzeichnet, dass** die Boden-Lichtprojektion (BLP) ein definiertes, grafisches Muster ist, welches durch flächige, helle Bereiche (HB1-HB3) mit definiertem Umriss gebildet ist, die durch wenigstens einen dunklen Bereich (DB) voneinander beabstandet sind.

4. Verfahren nach einem der vorhergehenden Ansprüche, **dadurch gekennzeichnet, dass** bei gleichzeitiger Erzeugung der Lichtfunktion des Abbiegelichts (AL) und der Boden-Lichtprojektion (BLP) wenigstens ein sich mit der Boden-Lichtprojektion (BLP) überschneidender Teil des Abbiegelichts (AL) auf einen Helligkeitswert (DW, DWS1) mit niedrigerer Helligkeit statisch gedimmt wird.

5. Verfahren nach einem der vorhergehenden Ansprüche, **dadurch gekennzeichnet, dass** der Helligkeitswert (DW, DWD) fortlaufend an die Umgebungshelligkeit (UH) angepasst wird.

6. Verfahren nach einem der vorhergehenden Ansprüche, **dadurch gekennzeichnet, dass** der Helligkeitswert (DW) derart an die Umgebungshelligkeit (UH) angepasst wird, dass bei Erreichen eines ersten Grenzwertes (UHG2) der Umgebungshelligkeit (UH) der Helligkeitswert (DW) auf einen ersten Wert (DWS1) und bei Erreichen eines zweiten, niedrigeren Grenzwertes (UHG3) der Umgebungshelligkeit (UH) auf einen zweiten Wert (DWS2) gesetzt wird, wobei der zweite Helligkeitswert (DWS2) niedriger ist als der erste Helligkeitswert (DWS1).

7. Verfahren nach einem der vorhergehenden Ansprüche, **dadurch gekennzeichnet, dass** die Boden-Lichtprojektion (BLP) von einem Anfangszustand bis zu einem Endzustand dynamisch aufgebaut wird, wobei eine Helligkeit der Boden-Lichtprojektion (BLP), beginnend mit einem Anfangswert zum Zeitpunkt des Anfangszustandes bis zu einem Maximum der Helligkeit zum Zeitpunkt des Endzustandes stetig erhöht wird.

8. Kraftfahrzeug (K) zur Durchführung des Verfahrens nach einem der vorhergehenden Ansprüche, mit frontseitigen und mit heckseitigen Beleuchtungsvorrichtungen (BF und BH), wobei durch die Beleuchtungsvorrichtungen (BF, BH) die Lichtfunktion eines Fahrtrichtungsanzeigers (FRA) erzeugbar ist, wobei die Lichtfunktion des Fahrtrichtungsanzeigers (FRA) durch Betätigung eines Betätigungselementes (112) erzeugbar ist, wobei ein Beleuchtungsvorrichtung (10a, 10b, 10c) zur Erzeugung der Lichtfunktion eines Abbiegelichtes (AL) vorhanden ist, wobei wenigstens ein Lichtsensor (110) vorhanden ist, der signaltechnisch mit der Beleuchtungsvorrichtung (10a, 10b, 10c) zur Erzeugung der Lichtfunktion des Abbiegelichtes (AL) verknüpft ist, wobei ferner wenigstens eine Beleuchtungsvorrichtung (10a, 10b, 10c) zur Erzeugung einer Boden-Lichtprojektion (BLP) vorhanden ist, wobei die Beleuchtungsvorrichtung (10a, 10b, 10c) zur Erzeugung einer Boden-Lichtprojektion (BLP) ebenfalls signaltechnisch mit wenigstens einem Lichtsensor (110) verbunden ist und dass eine Steuer- und Auswerteeinrichtung (109) zur Auswertung von Signalen des wenigstens einen Lichtsensors (110) vorhanden ist, durch welche in Abhängigkeit der Signale des wenigstens einen Lichtsensors (110) die Beleuchtungsvorrichtung (10a, 10b, 10c) zur Erzeugung der Boden-Lichtprojektion (BLP) und die Beleuchtungsvorrichtung (10a, 10b, 10c) zur Erzeugung der Lichtfunktion eines Abbiegelichtes (AL) ansteuerbar sind, wobei die Boden-Lichtprojektion (BLP) nur dann erzeugbar ist, wenn eine Umgebungshelligkeit (UH) des Kraftfahrzeugs (K) einen bestimmten Grenzwert (UHG1) unterschreitet, wobei der Grenzwert (UHG1) der Umgebungshelligkeit (UH) zur Erzeugung der Boden-Lichtprojektion (BLP) von einem Grenzwert (UHG2) der Umgebungshelligkeit (UH) zur Erzeugung der Lichtfunktion eines Abbiegelichts (AL) abweicht, **dadurch gekennzeichnet, dass** bei gleichzeitiger Erzeugung der Lichtfunktion des Abbiegelichts (AL) und der Boden-Lichtprojektion (BLP) wenigstens ein sich mit der Boden-Lichtprojektion (BLP) überschneidender Teil des Abbiegelichts (AL) auf einen Helligkeitswert (DW, DWD, DWS1, DWS2) mit niedrigerer Helligkeit dimmbar ist, derart, dass der Helligkeitswert (DW, DWD, DWS1, DWS2) auf die Umgebungshelligkeit (UH) abstimmbar ist.

## Claims

1. Method for generating the light function of a direction indicator (FRA) in a motor vehicle (K), the light function of the direction indicator (FRA) being activated when the motor vehicle (K) is in an operational state and an actuating element (112) in the motor vehicle (K) is actuated, it being possible to generate a ground light projection (BLP) in the immediate vicinity of the motor vehicle (K) in addition to generating the light function of the direction indicator (FRA), the ground light projection (BLP) being generated only when an ambient brightness (UH) of the motor vehicle (K) falls below a certain limit value (UHG1), the limit value (UHG1) of the ambient brightness (UH) for generating the ground light projection (BLP) deviating from a limit value (UHG2) of the ambient brightness (UH) for generating the light function of a cornering light (AL), **characterized in that,** when the light function of the cornering light (AL) and the ground light projection (BLP) are generated simultaneously, at least one part of the cornering light (AL) overlapping with the ground light projection (BLP) is dimmed to a brightness value (DW, DWD, DWS1, DWS2) having a lower brightness, such that the brightness value (DW, DWD, DWS1, DWS2) is adjusted to the ambient brightness (UH).

2. Method according to claim 1, **characterized in that** the limit value (UHG1) for generating the ground light projection (BLP) corresponds to a higher ambient brightness (UH) than the limit value (UHG2) for generating the light function of the cornering light (AL).

3. Method according to any of the preceding claims, **characterized in that** the ground light projection (BLP) is a defined, graphic pattern formed by flat, bright regions (HB1-HB3) having a defined outline, which are spaced apart from one another by at least one dark region (DB).

4. Method according to any of the preceding claims, **characterized in that,** when the light function of the cornering light (AL) and the ground light projection (BLP) are generated simultaneously, at least one part of the cornering light (AL) overlapping with the ground light projection (BLP) is statically dimmed to a brightness value (DW, DWS1) having a lower brightness.

5. Method according to any of the preceding claims, **characterized in that** the brightness value (DW, DWD) is continuously adjusted to the ambient brightness (UH).

6. Method according to any of the preceding claims, **characterized in that** the brightness value (DW) is adjusted to the ambient brightness (UH) such that, when a first limit value (UHG2) of the ambient brightness (UH) is reached, the brightness value (DW) is set to a first value (DWS1) and, when a second, lower limit value (UHG3) of the ambient brightness (UH) is reached, the brightness value is set to a second value (DWS2), the second brightness value (DWS2) being lower than the first brightness value (DWS1).

7. Method according to any of the preceding claims, **characterized in that** the ground light projection (BLP) is dynamically built up from an initial state to a final state, a brightness of the ground light projection (BLP) being steadily increased, starting with an initial value at the time of the initial state up to a maximum of the brightness at the time of the final state.

8. Motor vehicle (K) for carrying out the method according to any of the preceding claims, comprising front-side and rear-side lighting devices (BF and BH), it being possible to generate the light function of a direction indicator (FRA) by means of the lighting devices (BF, BH), it being possible to generate the light function of the direction indicator (FRA) by actuating an actuating element (112), a lighting device (10a, 10b, 10c) being provided for generating the light function of a cornering light (AL), at least one light sensor (110) being provided which is signal-linked to the lighting device (10a, 10b, 10c) for generating the light function of the cornering light (AL), at least one lighting device (10a, 10b, 10c) also being provided for generating a ground light projection (BLP), the lighting device (10a, 10b, 10c) for generating a ground light projection (BLP) also being signal-connected to at least one light sensor (110), and that a control and evaluation device (109) is provided for evaluating signals from the at least one light sensor (110), by means of which control and evaluation device the lighting device (10a, 10b, 10c) for generating the ground light projection (BLP) and the lighting device (10a, 10b, 10c) for generating the light function of a cornering light (AL) can be controlled depending on the signals from the at least one light sensor (110), it being possible to generate the ground light projection (BLP) only if an ambient brightness (UH) of the motor vehicle (K) falls below a certain limit value (UHG1), the limit value (UHG1) of the ambient brightness (UH) for generating the ground light projection (BLP) deviating from a limit value (UHG2) of the ambient brightness (UH) for generating the light function of a cornering light (AL), **characterized in that,** when the light function of the cornering light (AL) and the ground light projection (BLP) are generated simultaneously, at least one part of the cornering light (AL) overlapping with the ground light projection (BLP) can be dimmed to a brightness value (DW, DWD, DWS1, DWS2) having a lower brightness, such that the brightness value (DW, DWD, DWS1, DWS2) can be adjusted to the ambient brightness (UH).

## Revendications

1. Procédé de génération de la fonction lumineuse d'un indicateur de direction (FRA) dans un véhicule automobile (K), dans lequel une activation de la fonction lumineuse de l'indicateur de direction (FRA) a lieu lorsque le véhicule automobile (K) se trouve dans un état prêt à fonctionner et qu'un élément d'actionnement (112) est actionné dans le véhicule automobile (K), dans lequel, en plus de la génération de la fonction lumineuse de l'indicateur de direction (FRA), une projection de lumière au sol (BLP) peut être générée à proximité immédiate du véhicule automobile (K), dans lequel la projection de lumière au sol (BLP) n'est générée que lorsqu'une luminosité ambiante (UH) du véhicule automobile (K) est inférieure à une valeur limite (UHG1) déterminée, dans lequel la valeur limite (UHG1) de la luminosité ambiante (UH) pour la génération de la projection de lumière au sol (BLP) est différente d'une valeur limite (UHG2) de la luminosité ambiante (UH) pour la génération de la fonction lumineuse d'un feu de virage (AL), **caractérisé en ce que**, lors de la génération simultanée de la fonction lumineuse du feu de virage (AL) et de la projection de lumière au sol (BLP), au moins une partie du feu de virage (AL) qui se recoupe avec la projection de lumière au sol (BLP) est atténuée à une valeur de luminosité (DW, DWD, DWS1, DWS2) ayant une luminosité plus faible, de telle sorte que la valeur de luminosité (DW, DWD, DWS1, DWS2) est adaptée à la luminosité ambiante (UH).

2. Procédé selon la revendication 1, **caractérisé en ce que** la valeur limite (UHG1) pour la génération de la projection de lumière au sol (BLP) correspond à une luminosité ambiante (UH) supérieure à la valeur limite (UHG2) pour la génération de la fonction lumineuse du feu de virage (AL).

3. Procédé selon l'une des revendications précédentes,
**caractérisé en ce que** la projection de lumière au sol (BLP) est un motif graphique défini, qui est formé par des zones claires planes (HB1-HB3) de contour défini, qui sont espacées les unes des autres par au moins une zone sombre (DB).

4. Procédé selon l'une des revendications précédentes,
**caractérisé en ce que,** lors de la génération simultanée de la fonction lumineuse du feu de virage (AL) et de la projection de lumière au sol (BLP), au moins une partie du feu de virage (AL) qui se recoupe avec la projection de lumière au sol (BLP) est atténuée de manière statique à une valeur de luminosité (DW, DWS1) avec une luminosité plus faible.

5. Procédé selon l'une des revendications précédentes,
**caractérisé en ce que** la valeur de luminosité (DW, DWD) est adaptée en continu à la luminosité ambiante (UH).

6. Procédé selon l'une des revendications précédentes,
**caractérisé en ce que** la valeur de luminosité (DW) est adaptée à la luminosité ambiante (UH) de telle sorte que, lorsqu'une première valeur limite (UHG2) de la luminosité ambiante (UH) est atteinte, la valeur de luminosité (DW) est fixée à une première valeur (DWS1) et, lorsqu'une seconde valeur limite inférieure (UHG3) de la luminosité ambiante (UH) est atteinte, la luminosité ambiante est fixée à une seconde valeur (DWS2), dans lequel la seconde valeur de luminosité (DWS2) est inférieure à la première valeur de luminosité (DWS1).

7. Procédé selon l'une des revendications précédentes,
**caractérisé en ce que** la projection de lumière au sol (BLP) est construite de manière dynamique d'un état initial à un état final, dans lequel une luminosité de la projection de lumière au sol (BLP), en commençant par une valeur initiale au moment de l'état initial, est augmentée de manière continue jusqu'à un maximum de la luminosité au moment de l'état final.

8. Véhicule automobile (K) permettant la mise en œuvre du procédé selon l'une des revendications précédentes, comportant des dispositifs d'éclairage (BF et BH) côté avant et côté arrière, dans lequel la fonction lumineuse d'un indicateur de direction (FRA) peut être générée par les dispositifs d'éclairage (BF, BH), dans lequel la fonction lumineuse de l'indicateur de direction (FRA) peut être générée par l'actionnement d'un élément d'actionnement (112), dans lequel un dispositif d'éclairage (10a, 10b, 10c) est présent pour générer la fonction lumineuse d'un feu de virage (AL), dans lequel au moins un capteur de lumière (110) est présent, qui est relié par une technique de signalisation au dispositif d'éclairage (10a, 10b, 10c) pour générer la fonction lumineuse du feu de virage (AL), dans lequel au moins un dispositif d'éclairage (10a, 10b, 10c) est en outre présent pour générer une projection de lumière au sol (BLP), dans lequel le dispositif d'éclairage (10a, 10b, 10c) pour la génération d'une projection de lumière au sol (BLP) est également relié par une technique de signalisation à au moins un capteur de lumière (110) et en ce qu'un dispositif de commande et d'évaluation (109) est présent pour l'évaluation de signaux de l'au moins un capteur de lumière (110), par lequel, en fonction des signaux de l'au moins un capteur de lumière (110), le dispositif d'éclairage (10a, 10b, 10c) pour générer la projection de lumière au sol (BLP) et le dispositif d'éclairage (10a, 10b, 10c) pour générer la fonction lumineuse d'un feu de virage (AL) peuvent être commandés, dans lequel la projection de lumière au sol (BLP) ne peut être générée que lorsqu'une luminosité ambiante (UH) du véhicule automobile (K) est inférieure à une valeur limite (UHG1) déterminée, dans lequel la valeur limite (UHG1) de la luminosité ambiante (UH) pour la génération de la projection de lumière au sol (BLP) est différente d'une valeur limite (UHG2) de la luminosité ambiante (UH) pour la génération de la fonction lumineuse d'un feu de virage (AL),
**caractérisé en ce que,** lors de la génération simultanée de la fonction lumineuse du feu de virage (AL) et de la projection de lumière au sol (BLP), au moins une partie du feu de virage (AL) qui se recoupe avec la projection de lumière au sol (BLP) peut être atténuée à une valeur de luminosité (DW, DWD, DWS1, DWS2) ayant une luminosité plus faible, de telle sorte que la valeur de luminosité (DW, DWD, DWS1, DWS2) peut être adaptée à la luminosité ambiante (UH).
